# EUROPÄISCHE PATENTSCHRIFT

(11) **EP 0 859 740 B1**
(45) Veröffentlichungstag und Bekanntmachung des Hinweises auf die Patenterteilung: **22.09.1999**
(21) Anmeldenummer: 96938991.5
(22) Anmeldetag: 05.11.1996
(51) Int. Cl.: C01B 33/158, C01B 33/143

(54) **VERFAHREN ZUR HERSTELLUNG VON ORGANISCH MODIFIZIERTEN AEROGELEN, BEI DEM DIE GEBILDETEN SALZE AUSGEFÄLLT WERDEN**
PROCESS FOR PREPARING ORGANICALLY MODIFIED AEROGELS IN WHICH THE SALTS FORMED ARE PRECIPITATED OUT
PROCEDE DE PREPARATION D'AEROGELS MODIFIES DE MANIERE ORGANIQUE, SELON LEQUEL LES SELS FORMES SONT PRECIPITES

(30) Priorität: 09.11.1995 DE 19541715
(43) Veröffentlichungstag der Anmeldung: 26.08.1998
(73) Patentinhaber: CABOT CORPORATION, Boston, MA 02109 (US)
(72) Erfinder: SCHWERTFEGER, Fritz, D-60529 Frankfurt am Main (DE)
(74) Vertreter: Luderschmidt, Schüler & Partner GbR
(86) Internationale Anmeldenummer: EP9604822
(87) Internationale Veröffentlichungsnummer: WO9717288

(56) Entgegenhaltungen:
- EP-A- 0 658 513
- DE-A- 3 346 180
- US-A- 2 285 477

## Beschreibung

Die Erfindung betrifft ein Verfahren zur Herstellung von organisch modifizierten SiO₂-Aerogelen, bei dem die gebildeten Salze ausgefällt werden.

Aerogele, insbesondere solche mit Porositäten über 60% und Dichten unter 0,6 g/cm³, weisen eine äußerst geringe thermische Leitfähigkeit auf und finden deshalb Anwendung als Wärmeisolationsmaterial, wie z.B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel als Xerogel. Es ist anzumerken, daß es sich bei den erfindungsgemäßen Gelen um Aerogele, im Sinne von Gel mit Luft als Dispersionsmittel handelt.

SiO₂-Aerogele können beispielsweise durch saure Hydrolyse von Tetraethylorthosilikat in Ethanol hergestellt werden. Bei der Hydrolyse entsteht ein Gel, dessen Struktur unter anderem durch die Temperatur, den pH-Wert und die Dauer des Gelierprozesses bestimmt ist. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d. h. es tritt auch kein Schrumpfen des Gels während der Trocknung auf. Auf dieser Trocknungstechnik basierende Herstellungsverfahren sind z.B. aus der EP-A-O 396 076 und der WO 92/03378 bekannt. Diese Technik erfordert aber, beispielsweise bei der Verwendung von Ethanol, eine Temperatur von etwa 240°C und Drücke von über 60 bar. Der Austausch von Ethanol gegen CO₂ vor der Trocknung erniedrigt zwar die Trocknungstemperatur auf ca. 30°C, der benötigte Druck liegt dann aber bei über 70 bar.

Eine Alternative zu obiger Trocknung bietet ein Verfahren zur unterkritischen Trocknung von SiO₂-Gelen, wenn diese vor der Trocknung mit einem chlorhaltigen Silylierungsmittel umgesetzt werden. Das SiO₂-Gel kann dabei beispielsweise durch saure Hydrolyse von Tetraalkoxysilanen, bevorzugt Tetraethoxysilan (TEOS), in einem geeigneten organischen Lösungsmittel, bevorzugt Ethanol, mittels Wasser erhalten werden. Nach Austausch des Lösungsmittels gegen ein geeignetes organisches Lösungsmittel wird in einem weiteren Schritt das erhaltene Gel mit einem chlorhaltigen Silylierungsmittel umgesetzt. Als Silylierungsmittel werden dabei aufgrund ihrer Reaktivität bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend aus einem organischen Lösungsmittel heraus an der Luft getrocknet werden. Damit können Aerogele mit Dichten unter 0,4 g/cm³ und Porositäten über 60% erreicht werden.
Das auf dieser Trocknungstechnik basierende Herstellungsverfahren ist ausführlich in der WO 94/25149 beschrieben.

Die oben beschriebenen Gele können darüber hinaus vor der Trocknung in der alkohol-wässrigen Lösung mit Tetraalkoxysilanen versetzt und gealtert werden, um die Gelnetzwerkstärke zu erhöhen, wie z.B. in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar.

Eine erste nicht unerhebliche Kostensenkung kann durch die Verwendung von Wasserglas als Ausgangsmaterial für die Herstellung der SiO₂-Gele erreicht werden. Dazu kann beispielsweise aus einer wäßrigen Wasserglaslösung mit Hilfe eines lonenaustauscherharzes eine Kieselsäure hergestellt werden, die durch Zugabe einer Base zu einem SiO₂-Gel polykondensiert. Nach Austausch des wäßrigen Mediums gegen ein geeignetes organisches Lösungsmittel wird dann in einem weiteren Schritt das erhaltene Gel mit einem chlorhaltigen Silylierungsmittel umgesetzt. Als Silylierungsmittel werden dabei aufgrund ihrer Reaktivität ebenfalls bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren ist aus der DE-A-43 42 548 bekannt.

Ein ungelöstes Problem stellen die bei der Herstellung von Aerogelen aus Wasserglas anfallenden wäßrigen Salzlösungen dar. Um eine Wasserglaslösung in ein zur Kondensation befähigtes Kieselsäuresol zu überführen, müssen die Kationen (meist Natrium- und/oder Kaliumionen) in der Wasserglaslösung gegen Protonen ausgetauscht werden. Dazu können organische und/oder anorganische Säuren verwendet werden. Die dabei zwangsläufig ebenfalls in gelöster Form entstehenden Salze der oben genannten Kationen (z.B. NaCl oder Na₂SO₄) müssen vor, während oder nach der Gelalterung aus dem Gel gewaschen werden. Diese stark verdünnten, wäßrigen Salzlösungen stellen heutzutage ein großes Entsorgungsproblem dar, da sie in größeren Mengen nicht mehr ohne weiteres in Flüsse und Seen eingeleitet werden dürfen. Eine den gängigen Vorschriften entsprechende Endlagerung dieser Lösungen stellt einen extrem hohen Kostenfaktor dar.

Aus US-A-2 285 477 ist es bekannt, ein Kieselsol aus Wasserglas und Schwefelsäure herzustellen, und das dabei gebildete Natriumsulfat durch Kühlen des Reaktionsgemisches aus zu Kristallisieren und abzutrennen.

Aufgabe der vorliegenden Erfindung war es daher, ein Verfahren zur Herstellung von organisch modifizierten SiO₂-Aerogelen bereitzustellen, bei dem keine verdünnten wäßrigen Salzlösungen anfallen.

Diese Aufgabe wird gelöst durch ein Verfahren zur Herstellung von organisch modifizierten Aerogelen, bei dem man
a) aus einer wäßrigen Wasserglaslösung mit Hilfe mindestens einer organischen und/oder anorganischen Säure ein Kieselsäuresol herstellt, das einen pH-Wert ≤ 4,0 hat,
b) das dabei entstandene Kieselsäuresol durch Zugabe einer Base zu einem SiO₂-Gel polykondensiert,
c) das in Schritt b) erhaltene Gel mit einem organischen Lösungsmittel solange wäscht, bis der Wassergehalt des Gels ≤ 5 Gew.% ist,
d) das in Schritt c) erhaltene Gel oberflächensilyliert, und
e) das in Schritt d) erhaltene oberflächensilylierte Gel trocknet, das dadurch gekennzeichnet ist, daß man die aus der Säure und den Kationen des Wasserglases gebildeten Salze bei Temperaturen von 0 bis 30°C vor Schritt b) weitestgehend ausfällt und vom Kieselsäuresol abtrennt.

Als Wasserglaslösung wird in Schritt a) im allgemeinen eine 6 bis 25 Gew.%ige (bezogen auf den SiO₂-Gehalt) Natrium- und/oder Kaliumwasserglaslösung verwendet. Bevorzugt ist eine 17 bis 20 Gew.%ige Wasserglaslösung. Ferner kann die Wasserglaslösung auch bezogen auf SiO₂ bis 90 Gew.-% zur Kondensation befähigte Zirkonium-, Aluminium- und/oder Titan-Verbindungen enthalten.

Als Säuren werden allgemein 15 bis 50 Gew.%ige Säuren verwendet, die mit Natrium- und/oder Kaliumionen schwerlösliche Salze bilden. Es können auch Mischungen entsprechender Säuren eingesetzt werden.
Bevorzugt sind Schwefel-, Phosphor-, Fluß- und Oxalsäure. Besonders bevorzugt ist Schwefelsäure.

Um eine möglichst vollständige Ausfällung und eine gute Abtrennung der im Schritt a) gebildeten schwerlöslichen Salze zu erreichen, sollte das Kieselsäuresol eine Temperatur zwischen 0 und 30°C, vorzugsweise zwischen 0 und 15°C und besonders bevorzugt zwischen 0 und 5°C aufweisen. Dies kann dadurch erreicht werden, daß man die Wasserglaslösung, die Säure und/oder das Kieselsäuresol auf eine Temperatur zwischen 0 und 30°C, vorzugsweise zwischen 0 und 15°C und besonders bevorzugt zwischen 0 und 5°C bringt. Sollte sich dabei eine übersättigte Salzlösung bilden, so kann durch geeignetes Animpfen mit entsprechenden Impfkristallen das Salz zur Ausfällung gebracht werden. Die Abtrennung der gefällten Salze erfolgt mit dem Fachmann bekannten Vorrichtungen, wie z.B. Filter, Fritten, Nutschen, Membranen oder Kristallisationsgefäßen. Bevorzugt sind halbkontinuierliche oder kontinuierliche Verfahren.

Nach der Abtrennung der Salze wird das Kieselsäuresol mit Wasser bevorzugt auf eine Konzentration zwischen 5 und 12 Gew.% (bezogen auf den SiO₂-Gehalt) eingestellt. Besonders bevorzugt ist eine 6 bis 9 Gew.%ige Kieselsäurelösung.

Die Polykondensation des nach Schritt a) erhaltenen, im wesentlichen salzfreien Kieselsäuresols zu einem SiO₂-Gel erfolgt in Schritt b) durch Zugabe einer Base in einem pH-Wert-Bereich zwischen 3,0 und 7,0, vorzugsweise 4,0 und 6,0. Als Base wird im allgemeinen NH₄OH, NaOH, KOH, Al(OH)₃, kolloidale Kieselsäure und/oder eine alkalische Wasserglaslösung eingesetzt. Bevorzugt sind NH₄OH, NaOH und KOH, besonders bevorzugt ist NaOH. Es können aber auch Mischungen der selben verwendet werden.

Der Schritt b) wird im allgemeinen bei einer Temperatur zwischen dem Gefrierpunkt der Lösung und 100°C durchgeführt. Dabei kann gegebenenfalls gleichzeitig ein Formgebungsschritt, wie z.B. Spray-forming, Extrusion oder Tropfenbildung durchgeführt werden.

Vor Schritt c) läßt man das Gel vorzugsweise altern, und zwar im allgemeinen bei 40 bis 100°C, vorzugsweise bei 80 bis 100°C, und einem pH-Wert von 4 bis 11, vorzugsweise 5 bis 7. Die Zeit dafür beträgt im allgemeinen 1 Sekunde bis 12 Stunden, vorzugsweise 1 Sekunde bis 5 Stunden.

Das gealterte Hydrogel kann gegebenenfalls noch mit Wasser elektrolytfrei gewaschen werden.

In Schritt c) wäscht man das aus Schritt b) erhaltene Gel mit einem organischen Lösungsmittel solange, bis der Wassergehalt des Gels ≤ 5 Gew.%, vorzugsweise ≤ 2 Gew.-% und besonders bevorzugt ≤ 1 Gew.-%, ist. Als Lösungsmittel werden im allgemeinen aliphatische Alkohole, Ether, Ester oder Ketone, sowie aliphatische o'der aromatische Kohlenwasserstoffe verwendet. Bevorzugte Lösungsmittel sind Methanol, Ethanol, Aceton, Tetrahydrofuran, Essigsäureethylester, Dioxan, n-Hexan und Toluol. Besonders bevorzugt ist Aceton als Lösungsmittel. Man kann aber auch Gemische aus den genannten Lösungsmitteln verwenden. Ferner kann auch zuerst das Wasser mit einem wassermischbaren Alkohol ausgewaschen und dann dieser mit einem Kohlenwasserstoff ausgewaschen werden.

In Schritt d) wird das lösungsmittelhaltige Gel mit einem Silylierungsmittel umgesetzt. Als Silylierungsmittel werden im allgemeinen Silane der Formeln R¹₄₋ₙSiClₙ oder R¹₄₋ₙSi(OR²)ₙ mit n = 1 bis 3 eingesetzt, wobei R¹ und R² unabhängig voneinander C₁-C₆-Alkyl, Cyclohexyl oder Phenyl sind. Auch Isopropenoxysilane sowie Silazane sind geeignet. Vorzugsweise verwendet man Trimethylchlorsilan. Darüber hinaus können alle dem Fachmann bekannten Silylierungsmittel eingesetzt werden, beispielsweise auch solche, wie in der DE-A-44 30 669 offenbart. Die Umsetzung wird im allgemeinen bei 20 bis 100°C, vorzugsweise 30 bis 70°C durchgeführt, wenn nötig in einem Lösungsmittel. Gegebenenfalls kann die Silylierung durch einen Katalysator, beispielsweise eine Säure oder Base, beschleunigt werden.

Vor Schritt e) wird das silylierte Gel vorzugsweise mit einem protischen oder aprotischen Lösungsmittel gewaschen, bis unumgesetztes Silylierungsmittel im wesentlichen entfernt ist (Restgehalt ≤ 1 Gew.-%). Geeignete Lösungsmittel sind dabei die bei Schritt c) genannten. Analog sind die dort als bevorzugt genannten Lösungsmittel auch hier bevorzugt.

In Schritt e) wird das silylierte, und vorzugsweise danach gewaschene Gel vorzugsweise unterkritisch, besonders bevorzugt bei Temperaturen von -30 bis 200°C, und insbesondere von 0 bis 100°C, getrocknet. Die bei der Trocknung angewandten Drücke liegen vorzugsweise bei 0,001 bis 20 bar, besonders bevorzugt bei 0,01 bis 5 bar.

Das in Schritt d) erhaltene Gel kann auch überkritisch getrocknet werden. Dies erfordert entsprechend dem jeweiligen Lösungsmittel höhere Temperaturen als 200°C und/oder höhere Drücke als 20 bar. Dies ist ohne weiteres möglich, aber es ist mit erhöhtem Aufwand verbunden und bringt keine wesentlichen Vorteile mit sich.

Die Trocknung wird im allgemeinen so lange fortgeführt, bis das Gel einen Lösungsmittel-Restgehalt von weniger als 0,1 Gew.-% aufweist.

In einer weiteren Ausführungsform kann das Gel nach der formgebenden Polykondensation in Schritt b) und/oder jedem nachfolgenden Verfahrensschritt nach den dem Fachmann bekannten Techniken, wie z.B. Mahlen, zerkleinert werden.

Des weiteren können dem Sol vor der Gelherstellung zur Reduktion des Strahlungsbeitrags zur Wärmeleitfähigkeit IR-Trübungsmittel, wie z.B. Ruß, Titandioxid, Eisenoxide und/oder Zirkondioxid zugesetzt werden.

Ebenfalls vor der Gelherstellung können dem Sol zur Erhöhung der mechanischen Stabilität Fasern zugesetzt werden. Als Fasermaterialien können anorganische Fasern, wie Glasfasern oder Mineralfasern, organische Fasern, wie Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie Aluminium metallisiert sind.

Das erfindungsgemäße Verfahren wird im folgenden anhand eines Ausführungsbeispiels näher beschrieben, ohne dadurch beschränkt zu werden.

### Beispiel 1

236 g einer auf 0°C gekühlten 25%igen H₂SO₄ werden unter ständigem Kühlen auf 0°C tropfenweise mit 707 g einer auf 7°C gekühlten Natriumwasserglaslösung (mit einem Gehalt von 17 Gew.-% SiO₂ und einem Na₂O:SiO₂ Verhältnis von 1:3,3) versetzt. Dabei stellt sich ein pH-Wert von 1,6 ein. Das ausfallende Na₂SO₄ * 10 H₂O wird bei 0°C mit Hilfe einer Nutsche vom Kieselsäuresol abgetrennt und das Kieselsäuresol mit 280 ml H₂O verdünnt.

Das so erhaltene Kieselsäuresol wird bei einer Temperatur von 5°C unter Rühren mit 26 ml einer 1n NaOH-Lösung versetzt, um einen pH-Wert von 4,7 einzustellen. Danach wird das entstandene Hydrogel 2,5 Stunden bei 85°C gealtert.
Das Elastizitätsmodul des gealterten Hydrogels beträgt 15,5 MPa. Es wird mit 2 1 warmem Wasser gewaschen und anschließend das Wasser mit Aceton so lange extrahiert, bis der Wassergehalt im Gel unter 1 Gew.-% liegt. Anschließend wird das acetonhaltige Gel mit 5 Gew.-% Trimethylchlorsilan (TMCS) 3 Stunden bei 50°C silyliert und mit 2 1 Aceton gewaschen. Die Trocknung des Gels erfolgt an Luft (3 Stunden bei 40°C, dann 2 Stunden bei 50°C und 12 Stunden bei 150°C).
Das so erhaltene, transparente Aerogel hat eine Dichte von 0,1 5 g/cm³. Die spezifische Oberfläche nach BET liegt bei 500 m²/g. Der λ-Wert liegt bei 0,020 W/mK.

Die Wärmeleitfähigkeit wurde mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

## Patentansprüche

1. Verfahren zur Herstellung von organisch modifizierten Aerogelen, bei dem man
a) aus einer wäßrigen Wasserglaslösung mit Hilfe mindestens einer organischen und/oder anorganischen Säure ein Kieselsäuresol herstellt, das einen pH-Wert ≤ 4,0 hat,
b) das dabei entstandene Kieselsäuresol durch Zugabe einer Base zu einem SiO₂-Gel polykondensiert,
c) das in Schritt b) erhaltene Gel mit einem organischen Lösungsmittel solange wäscht, bis der Wassergehalt des Gels ≤ 5 Gew.% ist,
d) das in Schritt c) erhaltene Gel oberflächensilyliert, und
e) das in Schritt d) erhaltene oberflächensilylierte Gel trocknet, dadurch gekennzeichnet, daß man die aus der Säure und den Kationen des Wasserglases gebildeten Salze bei Temperaturen von 0 bis 30°C vor Schritt weitestgehend ausfällt und vom Kieselsäuresol abtrennt.

2. Verfahren gemäß Anspruch 1, dadurch gekennzeichnet, daß man als Wasserglaslösung in Schritt a) eine 6 bis 25 Gew.-%ige Natrium- und/oder Kaliumwasserglaslösung verwendet.

3. Verfahren gemäß Anspruch 1 oder 2, dadurch gekennzeichnet, daß die Wasserglaslösung, bezogen auf SiO₂ bis 90 Gew.-% zur Kondensation befähigte Zirkonium-, Aluminium- und/oder Titan-Verbindungen enthält.

4. Verfahren gemäß mindestens einem der Ansprüche 1 bis 3, dadurch gekennzeichnet, daß man als Säure 15 bis 50 Gew-%ige Schwefelsäure verwendet.

5. Verfahren gemäß mindestens einem der Ansprüche 1 bis 4, dadurch gekennzeichnet, daß man als Base in Schritt b) NaOH, NH₄OH, KOH, Al(OH)₃, kolloidale Kieselsäure und/oder eine alkalische Wasserglaslösung verwendet.

6. Verfahren gemäß mindestens einem der Ansprüche 1 bis 5, dadurch gekennzeichnet, daß man das Gel vor Schritt c) bei 40 bis 100°C, einem pH-Wert von 4 bis 11 zwischen 1 Sekunde und 12 Stunden altert.

7. Verfahren gemäß mindestens einem der Ansprüche 1 bis 6, dadurch gekennzeichnet, daß man als Lösungsmittel in Schritt c) aliphatische Alkohole, Ether, Ester, Ketone, aliphatische oder aromatische Kohlenwasserstoffe verwendet.

8. Verfahren gemäß mindestens einem der Ansprüche 1 bis 7, dadurch gekennzeichnet, daß man als Silylierungsmittel Silane der Formeln R¹₄₋ₙSiClₙ oder R¹₄₋ₙSi(OR²)ₙ mit n = 1 bis 3 einsetzt, wobei R¹ und R² unabhängig voneinander C₁-C₆-Alkyl, Cyclohexyl oder Phenyl sind.

9. Verfahren gemäß mindestens einem der Ansprüche 1 bis 8, dadurch gekennzeichnet, daß man das silylierte Gel vor Schritt e) mit einem protischen oder aprotischen Lösungsmittel wäscht.

10. Verfahren gemäß mindestens einem der Ansprüche 1 bis 9, dadurch gekennzeichnet, daß man das Gel in Schritt e) unterkritisch trocknet.

11. Verfahren gemäß mindestens einem der Ansprüche 1 bis 10, dadurch gekennzeichnet, daß man dem Sol vor der Gelherstellung IR-Trübungsmittel und/oder Fasern zusetzt.

## Claims

1. A method of producing organically modified aerogels in which
a) from an aqueous water glass solution, a silica sol having a pH value of ≤4.0 is produced by means of at least one organic and/or inorganic acid,
b) the resulting silica sol is polycondensed by the addition of a base to produce an SiO₂ gel,
c) the gel obtained in step b) is washed with an organic solvent until such time as the water content of the gel is ≤5% by weight,
d) the gel obtained in step c) is surface silylated, and
e) the surface silylated gel obtained in step d) is dried, characterised in that the salts formed from the acid and the cations of the water glass are to the greatest possible degree precipitated and separated from the silica sol prior to step b) and at temperatures of 0 to 30°C.

2. A method according to claim 1, characterised in that a 6 to 25% by weight sodium and/or potassium water glass solution is used as the water glass solution in step a).

3. A method according to claim 1 or 2, characterised in that the water glass solution, in relation to SiO₂ contains up to 90% by weight of zirconium, aluminium and/or titanium compounds which are capable of condensation.

4. A method according to at least one of claims 1 to 3, characterised in that 15 to 50% by weight sulphuric acid is used as the acid.

5. A method according to at least one of claims 1 to 4, characterised in that NaOH, NH₄OH, KOH, Al(OH₃), colloidal silicic acid and/or an alkaline water glass solution is used as the base in step b).

6. A method according to at least one of claims 1 to 5, characterised in that prior to step c), the gel is aged at 40 to 100°C, and at a pH value of 4 to 11 for between 1 second and 12 hours.

7. A method according to at least one of claims 1 to 6, characterised in that aliphatic alcohols, esters, ethers, ketones, aliphatic or aromatic hydrocarbons are used as the solvent in step c).

8. A method according to at least one of claims 1 to 7, characterised in that silanes to the formulae R¹₄₋ₙSiCₙ or R¹₄₋ₙSi(OR²)ₙ in which n = 1 to 3 are used as the silylating agents, R¹ and R², independently of each other, being C₁ to C₆ alkyl, cyclohexyl or phenyl.

9. A method according to at least one of claims 1 to 8, characterised in that prior to step e) the silylated gel is washed with a protic or aprotic solvent.

10. A method according to at least one of claims 1 to 9, characterised in that the gel in step e) is subcritically dried.

11. A method according to at least one of claims 1 to 10, characterised in that IR clouding agents and/or fibres are added to the sol prior to gel production.

## Revendications

1. Procédé de préparation d'aérogels modifiés de manière organique, dans lequel on réalise les opérations consistant à
a) préparer un sol d'acide silicique à partir d'une solution aqueuse de verre soluble au moyen d'au moins un acide organique et/ou inorganique, qui a une valeur de pH ≤ 4,0,
b) polycondenser le sol d'acide silicique ainsi obtenu par addition d'une base en un gel de SiO₂,
c) laver le gel obtenu à l'étape b) avec un solvant organique jusqu'à ce que la teneur en eau du gel soit ≤ 5% en poids,
d) réaliser une silylation de la surface du gel obtenu à l'étape c), et
e) sécher le gel silylé en surface obtenu à l'étape d), séchage caractérisé en ce qu'on fait précipiter largement à des températures de 0 à 30°C les sels formés de l'acide et des cations du verre soluble et en ce qu'on sépare le précipité du sol d'acide silicique.

2. Procédé selon la revendication 1, caractérisé en ce qu'on utilise comme verre soluble à l'étape a) une solution à 6 à 25% en poids d'orthosilicate de potassium et/ou de sodium.

3. Procédé selon la revendication 1 ou 2, caractérisé en ce que la solution de verre soluble contient des composés de zirconium, aluminium et/ou titane jusqu'à 90% en poids par rapport au SiO₂, aptes à la condensation.

4. Procédé selon au moins une des revendications 1 à 3, caractérisé en ce qu'on utilise comme acide de l'acide sulfurique à 15 à 50% en poids.

5. Procédé selon au moins une des revendications 1 à 4, caractérisé en ce qu'on utilise comme base à l'étape b) NaOH, NH₄OH, KOH, Al(OH)₃, de l'acide silicique en solution colloïdale et/ou une solution alcaline de verre soluble.

6. Procédé selon au moins une des revendications 1 à 5, caractérisé en ce qu'on laisse vieillir le gel avant l'étape c) à 40 à 100°C, à une valeur de pH de 4 à 11 entre 1 seconde et 12 heures.

7. Procédé selon au moins une des revendications 1 à 6, caractérisé en ce qu'on utilise comme solvant à l'étape c) des alcools aliphatiques, des éthers, des esters, des cétones, des hydrocarbures aliphatiques ou aromatiques.

8. Procédé selon au moins une des revendications 1 à 7, caractérisé en ce qu'on applique comme agent de silylation des silanes de formules R¹₄₋ₙSiClₙ ou R¹₄₋ₙSi(OR²)ₙ avec n = 1 à 3, dans lesquelles R¹ et R² sont indépendamment l'un de l'autre un groupe alkyle en C₁-C₆, cyclohexyle ou phényle.

9. Procédé selon au moins une des revendications 1 à 8, caractérisé en ce qu'on lave le gel silylé avant l'étape e) avec un solvant protique ou aprotique.

10. Procédé selon au moins une des revendications 1 à 9, caractérisé en ce qu'on sèche le gel à l'étape e) de manière sous-critique.

11. Procédé selon au moins une des revendications 1 à 10, caractérisé en ce qu'on ajoute au sol avant la préparation du gel un opacifiant IR et/ou des fibres.
